## Europäisches Patentamt
## European Patent Office
## Office européen des brevets

(19)

(11) Veröffentlichungsnummer: **0 210 297**
**B1**

(12) # EUROPÄISCHE PATENTSCHRIFT

(45) Veröffentlichungstag der Patentschrift:
**28.12.88**

(51) Int. Cl.⁴: **B 29 C 47/02, B 05 D 1/26**

(21) Anmeldenummer: **85109741.0**

(22) Anmeldetag: **02.08.85**

(54) Verfahren und Einrichtung zum Extrusionsbeschichten einer Holzwerkstoff-Leiste mit einem thermoplastischen Kunststoff im Durchlaufverfahren.

(43) Veröffentlichungstag der Anmeldung:
**04.02.87 Patentblatt 87/6**

(45) Bekanntmachung des Hinweises auf die Patenterteilung:
**28.12.88 Patentblatt 88/52**

(84) Benannte Vertragsstaaten:
**AT DE FR GB IT**

(56) Entgegenhaltungen:
**FR-A- 2 341 425**
**US-A- 3 590 431**
**US-A- 3 616 147**
**US-A- 3 775 159**
**US-A- 3 941 866**

(73) Patentinhaber: **Schock & Co. GmbH, Gmünder Strasse 65, D-7060 Schorndorf (DE)**

(72) Erfinder: **Haase, Reinhard, Blankstrasse 5, D-4703 Bönen (DE)**

(74) Vertreter: **Hoeger, Stellrecht & Partner, Uhlandstrasse 14c, D-7000 Stuttgart 1 (DE)**

## Beschreibung

Die Erfindung betrifft ein Verfahren zum Extrusionsbeschichten einer Holzwerkstoff-Leiste mit einem thermoplastischen Kunststoff im Durchlaufverfahren, bei dem zunächst mittels eines ersten Extrusionswerkzeugs eine Schmelzkleberschicht schmelzflüssig auf die Leiste und dann mittels eines zweiten Extrusionswerkzeugs der thermoplastische Kunststoff auf die Schmelzkleberschicht aufgetragen wird. Ferner betrifft die Erfindung eine Einrichtung zur Durchführung eines derartigen Verfahrens.

Der Stand der Technik (DE-AS 1 264 303) empfiehlt für ein Verfahren der vorstehend erwähnten Art die Verwendung eines einzigen Extrusionswerkzeugs für das Aufbringen der Schmelzkleberschicht sowie des thermoplastischen Kunststoffs. Eine solche Vorgehensweise führt auch bei aus hochwertigen Span- oderr Hartfaserplatten sorgfältig hergestellten und deshalb verhältnismässig glatte Oberflächen aufweisenden Leisten zu dem gewünschten Erfolg einer glatten Kunststoffbeschichtung; dieses Ergebnis lässt sich mit dem bekannten Verfahren aber dann nicht erreichen, wenn aus Massiv- oder Sperrholz bestehende Leisten oder aus minderwertigen Span- oder Hartfaserplatten hergestellte Leisten zu beschichten sind — im ersten Fall führt das bekannte Verfahren zu Blasen zwischen der Beschichtung und dem Leistenkern, im zweiten Fall zu einer Sichtbarkeit der Unebenheiten des minderwertigeren Span- oder Hartfasermaterials.

Der Erfindung lag die Aufgabe zugrunde, das geschilderte bekannte Verfahren so zu verbessern, dass sich mit ihm Holzwerkstoffleisten aller Art, d.h. also auch solche aus Massiv- oder Sperrholz oder aus Span- oder Hartfasermaterial minderer Oberflächenqualität, mit einer glatten Beschichtung aus thermoplastischem Kunststoff versehen lassen. Diese Aufgabe lässt sich erfindungsgemäss dadurch lösen, dass bei einem Verfahren der eingangs erwähnten Art der Schmelzkleber unmittelbar nach dem Auftragen gekühlt und anschliessend seine Oberfläche mittels eines Kalibrierwerkzeugs geglättet wird, dass dann die Leiste samt Schmelzkleber gekühlt wird, ehe die Leiste in das zweite Extrusionswerkzeug eingeführt wird, und dass hinter dem letzteren die Beschichtung der Leiste gekühlt wird. Bei einer solchen Verfahrensführung wird die Schmelzkleberbeschichtung, nachdem sie das erste Extrusionswerkzeug verlassen und sich bereits etwas abgekühlt hat, kalibriert und dabei gleichzeitig geglättet, worauf dann die Leiste samt Schmelzkleberbeschichtung soweit heruntergekühlt wird, dass das Aufbringen des schmelzflüssigen thermoplastischen Kunststoffs im zweiten Extrusionswerkzeug nicht mehr zu einer Blasenbildung nach Verlassen des zweiten Extrusionswerkzeugs führt, insbesondere dann nicht, wenn die beschichtete Leiste unmittelbar nach Verlassen des zweiten Extrusionswerkzeugs schnellstmöglich abgekühlt wird. Mit dem vorzugsweise beheizten Kalibrierwerkzeug werden aber nicht nur eventuell aufgetretene Blasen «glatt gebügelt», sondern beim Kalibrieren werden auch durch eine mindere Oberflächenqualität des Leistenmaterials hervorgerufene Unebenheiten der Schmelzkleberbeschichtung beseitigt, so dass sich anschliessend immer eine glatte und ebene Schicht aus thermoplastischem Kunststoff auftragen lässt. Mit Hilfe des erfindungsgemässen Verfahrens ist es auch möglich, die zu beschichtenden Leisten endlos aneinanderzureihen, ohne dass dann die äussere Schicht der beschichteten Leisten im Bereich der Leistenenden stark sichtbare Markierungen aufweist — diese werden durch den Spachteleffekt des Schmelzklebers verhindert. Dadurch lässt sich der Abfall beim Ablängen der weiterzuverarbeitenden Leisten drastisch senken.

Beim Extrusionsummanteln einer Holzleiste mit einem thermoplastischen Kunststoff ist es an sich schon bekannt (FR-PS 1 243 305), auf die Holzleiste zunächst mit Hilfe eines Spritzwerkzeugs eine Spachtelmasse aufzutragen, die auch die Funktion eines Klebers haben kann, jedoch anschliessend durch Erhitzen getrocknet und gehärtet werden muss, wobei empfohlen wird, dabei die Holzleiste vorzutrocknen, ehe der thermoplastische Kunststoff aufextrudiert wird. Dieser Schritt des Trocknens und Härtens der Spachtelmasse sowie des Vortrocknens der Holzleiste muss entweder sehr langsam und deshalb zeitraubend durchgeführt werden, oder er führt zur Bildung von Blasen in dem von der Spachtelmasse gebildeten Überzug, da sich die in den äusseren Poren des Leistenholzes eingeschlossene Luft bei höheren Temperaturen ausdehnt und ausserdem der Feuchtigkeitsgehalt des Holzes zu einer Dampfblasenbildung führt. Beim darauffolgenden Aufextrudieren des thermoplastischen Kunststoffs wird bei diesem bekannten Verfahren der von der Holzleiste entwickelte Dampf abgeleitet, was mit Hilfe eines Extrusionswerkzeugs geschieht, in dem im Abstand von der Oberfläche der Holzleiste ein Kunststoffschlauch gebildet wird; ferner sind im Extrusionswerkzeug Dampfabzugskanäle vorgesehen, die in den sich bis zur Anlage des extrudierten Kunststoffschlauches auf der Leistenoberfläche stetig verjüngenden Zwischenraum münden. Das bekannte Verfahren führt also zu einer erheblichen Trocknung der Holzleiste, und da der auf der letzteren erzeugte Überzug nicht völlig feuchtigkeitsundurchlässig ist, führt die Luftfeuchtigkeit im Laufe der Zeit wieder zu einer Erhöhung des Feuchtigkeitsgehalts der Holzleiste und damit zu einer starken Längung, so dass beispielsweise im Laufe einiger Monate bereits montierte Fussbodenleisten die ihrer Befestigung dienenden Nägel abscheren.

Das bekannte Verfahren nach der FR-PS 1 243 405 konnte also das erfindungsgemässe Verfahren aus mehreren Gründen nicht nahelegen: Zum einen soll bei dem erfindungsgemässen Verfahren zur Vermeidung des vorstehend geschilderten Nachteils auf eine Trocknung der Holzwerkstoffleiste verzichtet werden. Zum zweiten soll schon aus Gründen einer zeitsparenden Produktion mit einem schmelzflüssig und daher lösungsmittelfrei aufgetragenen Kleber (sog. Hotmelt) gearbeitet werden, während das bekannte Verfahren nach der FR-PS 1 243 405 mit einer lösungsmittelhaltigen Spachtelmasse arbeitet, was sich aus der Tatsache ergibt, dass bei dem bekannten Verfahren die Spachtelmasse durch Erhitzen getrocknet und gehärtet werden muss. Auch offenbart das bekannte Verfahren den Schritt des Glättens und Kalibrierens der Spachtelmasse nicht.

Zum Glätten der Oberfläche der mit dem Schmelzkleber beschichteten Leiste mittels eines Kalibrierwerkzeugs wird empfohlen, die Oberfläche des Schmelzklebers auf eine Temperatur zu bringen, die es erlaubt, einen Glättungseffekt zu bewirken, jedoch ein Abschälen oder Abrollen des Schmelzklebers von der Leiste durch das Kalibrierwerkzeug verhindert. Zu diesem Zweck wird der Schmelzkleber wieder etwas erwärmt, ggf. auch noch weiter gekühlt, und zwar so, dass die Oberfläche des Schmelzklebers eine Temperatur von vorzugsweise ungefähr 150°C aufweist Danach wird der Schmelzkleber schnellstmöglich abgekühlt, insbesondere mittels eines Luftstroms, und beim Aufbringen des thermoplastischen Kunststoffs sollen längere Aufheizintervalle vermieden werden. Auch unmittelbar nach dem Aufbringen des thermoplastischen Kunststoffs sollte die nunmehr aus Schmelzkleber und thermoplastischem bestehende Beschichtung schnellstmöglich intensiv gekühlt werden, z.B. mittels eines wassergekühlten Werkzeugs zum Glätten und Kalibrieren oder mittels eines Wasserbads, um eine erneute Blasenbildung zu verhindern.

Bei einer bevorzugten Ausführungsform des erfindungsgemässen Verfahrens wird der Schmelzkleber nach dem Glätten mit Hilfe des Kalibrierwerkzeugs auf eine möglichst niedere Oberflächentemperatur abgekühlt, am besten in einem mit einem Kühlluftstrom beschickten Kühlkanal, so dass die Oberflächentemperatur des Schmelzklebers möglichst höchstens noch ca. 60°C, vorzugsweise weniger als 60°C und insbesondere höchstens ca. 30°C beträgt und infolgedessen beim Aufextrudieren des thermoplastischen Kunststoffs der Grenzflächenbereich Schmelzkleber/Holzwerkstoff nicht mehr so stark erhitzt wird, dass sich an dieser Stelle Blasen bilden können.

Um ein gutes Anhaften des aufextrudierten thermoplastischen Kunststoffs am Schmelzkleber und eine möglichst glatte Schmelzkleberoberfläche zu gewährleisten, sieht eine besonders vorteilhafte Ausführungsform des erfindungsgemässen Verfahrens die Massnahme vor, die Oberfläche des Schmelzklebers unmittelbar vor dem Aufextrudieren des thermoplastischen Kunststoffs nocheinmal kurz zu erwärmen und nachzuglätten.

Grundsätzlich eignen sich für das erfindungsgemässe Verfahren alle sog. Hotmelts, welche gute Haftvermittler zwischen einem Holzwerkstoff und einem thermoplastischen Kunststoff, wie er für derartige Beschichtungen verwendet wird, bilden. Vorteilhaft ist es, wenn der Schmelzkleber einen relativ hohen Füllstoffanteil aufweist, da sich mit ihm dann Unebenheiten der Leistenoberfläche besonders gut ausspachteln lassen. Besonders empfehlenswert ist die Verwendung eines Gemisches aus Äthylenvinylacetat-Harz (EVA-Harz), Cumaronharz und einem Füllstoff als Schmelzkleber, wobei sich vor allem Kreide, Schwerspat und dgl. als Füllstoffe eignen, und ein bevorzugtes Gemisch weist folgende Zusammensetzung auf: ca. 40% EVA-Harz, ca. 25% Cumaronharz und ca. 35% Kreide.

Als thermoplastischer Kunststoff eignet sich jedes extrudierbare Material, welches nicht bei so hohen Temperaturen verarbeitet werden muss, dass sich die Blasenbildung nicht mehr vermeiden lässt. Als billiger Beschichtungskunststoff empfiehlt sich PVC.

Für das Extrusionsbeschichten einer Holzwerkstoff-Leiste mit einer schmelzflüssig aufgebrachten Schmelzkleberschicht als Haftvermittler und einem thermoplastischen Kunststoff im Durchlaufverfahren wird eine Einrichtung empfohlen, die wie die in der DE-AS 1 264 303 als Alternative beschriebene Einrichtung ein erstes Spritzwerkzeug zum Auftragen einer schmelzflüssigen Schmelzkleberschicht auf die Leiste und ein in Durchlaufrichtung im Abstand hinter dem ersten Spritzwerkzeug angeordnetes zweites Spritzwerkzeug zum Auftragen des thermoplastischen Kunststoffs auf die Schmelzkleberschicht aufweist, wobei erfindungsgemäss zwischen den beiden Spritzwerkzeugen und im Abstand von diesen ein Kalibrierwerkzeug für die Schmelzkleberschicht angeordnet ist, um Blasen der Schmelzkleberschicht «glattzubügeln», für eine einwandfreie Füllung von Unebenheiten der Oberfläche der Holzwerkstoffleiste zu sorgen und um die Abmessungen der mit dem Schmelzkleber beschichteten Holzwerkstoffleiste zu kalibrieren.

In diesem Zusammenhang sei auf einen Stand der Technik auf dem Gebiet des Ummantelns von Kunststoffstäben hingewiesen (US-PS 3 616 147). Bei dieser bekannten Einrichtung, mit der Stäbe aus thermoplastischem Kunststoff zunächst mit Kunststofffäden umwickelt, dann mit einer Schmelzkleberschicht überzogen und schliesslich mit einem aufextrudierten Kunststoffmantel versehen werden, wird der Schmelzkleber mittels einer Rolle in schmelzflüssiger Form auf den umwickelten Kunststoffstab aufgebracht, und unmittelbar hinter der Rolle ist ein Schaber mit einer konusförmigen Durchlassöffnung für den Kunststoffstab angeordnet, mit dem überschüssiger Schmelzkleber abgestreift wird. In gehörigem Abstand hinter diesem Schaber ist schliesslich ein Spritzwerkzeug zum Auftragen des äusseren Kunststoffmantels angeordnet. Zum einen treten bei diesem Stand der Technik natürlich die ganzen, durch das Material Holzwerkstoff hervorgerufenen Probleme nicht auf, und zum anderen wird der Schmelzkleber nicht aufextrudiert, sondern mittels einer Rolle recht unexakt dosiert aufgetragen, weshalb die Verwendung einer Vorrichtung zum Abstreifen überschüssigen Schmelzklebers naheliegt — völlig anders als bei der erfindungsgemässen Einrichtung, bei der die Schmelzkleberschicht mit einem Extrusionswerkzeug aufgetragen wird, welches von Hause aus den Schmelzkleber nicht nur exakt dosiert, sondern der Schmelzkleberschicht schon beim Auftragen die gewünschte Form geben soll.

Das Verhältnis der vorteilhaften Abstände zwischen dem ersten Spritzwerkzeug und dem Kalibrierwerkzeug einerseits sowie zwischen dem letzteren und dem zweiten Spritzwerkzeug andererseits hängt von der Auftragstemperatur und Schichtstärke des Schmelzklebers, der Materialart der Holzwerkstoffleiste und der Durchlaufgeschwindigkeit der Leiste ab, und es kann insbesondere zwischen ca. 1:4 und ca. 1:7 variieren. Besonders bevorzugt wird ein Verhältnis von ca. 1:5; es hat sich gezeigt, dass dann der Schmelzkleber zwischen erstem Spritzwerkzeug und Kalibrierwerkzeug hinreichend abgast, damit nach dem Verlassen des Kalibrierwerkzeugs die Schmelzkleberschicht gasblasenfrei ist, während vor dem zweiten Spritzwerkzeug eine intensive Kühlung erforderlich ist, denn dort geht es nicht nur darum, ein beheiztes Spritzwerkzeug zu durchlaufen, sondern auf die mit Schmelzkleber beschichtete Leiste wird ja auch noch der heisse, schmelzflüssige thermoplastische Kunststoff aufgetragen, der nach Verlassen des zweiten Spritzwerkzeugs möglichst schnell abgekühlt werden muss, damit durch den Wärmeinhalt des thermoplastischen Kunststoffs der Schmelzkleber nicht erneut so weit erwärmt wird, dass Blasen und Deformationen die Folge sind.

Um eine möglichst glatte und ebene Schmelzkleberoberfläche zu erhalten, empfiehlt es sich schliesslich, das zweite Spritzwerkzeug vor der Mündung eines Kanals für den thermoplastischen Kunststoff mit einer sog. Schnabelplatte zu versehen, die sich entgegen der Durchlaufrichtung der Leiste geringfügig erweitert. Diese Schnabelplatte hat die Aufgabe, die Oberfläche des Schmelzklebers zu erwärmen, falls notwendig nachzuglätten, die Leiste der sich anschliessenden Düsenplatte zentrisch zuzuführen und so eine bessere Haftung des thermoplasstischen Kunststoffs auf dem Schmelzkleber zu bewirken.

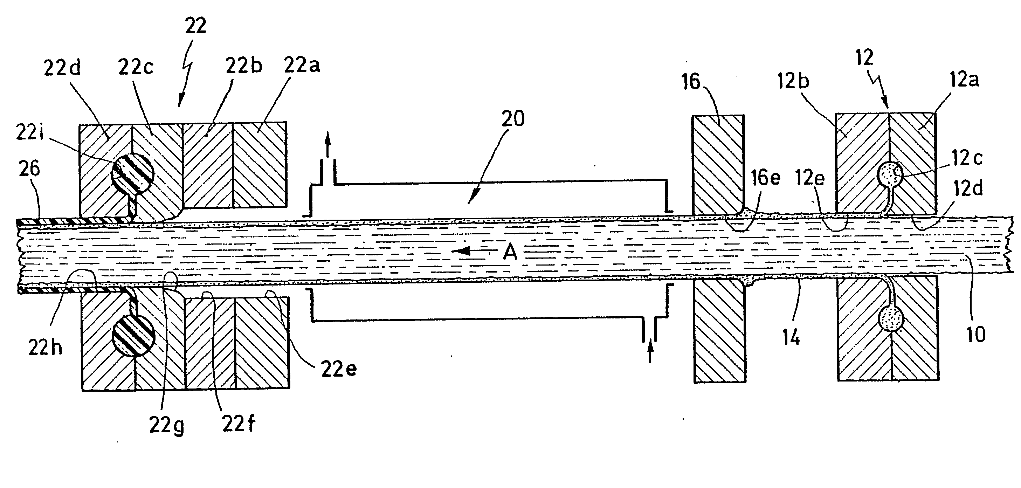

Weitere Vorteile, Merkmale und Einzelheiten der Erfindung ergeben sich aus der nachfolgenden Beschreibung sowie der beigefügten zeichnerischen Darstellung bevorzugter Ausführungsformen des erfindungsgemässen Verfahrens sowie der erfindungsgemässen Einrichtung zu seiner Durchführung; die beigefügte Zeichnung zeigt einen schematischen Schnitt durch diese Einrichtung.

Die Laufrichtung einer Holzwerkstoffleiste 10 durch die Einrichtung hindurch wurde mit dem Pfeil A gekennzeichnet. Die Leiste durchläuft also zuerst ein erstes beheiztes Extrusionswerkzeug 12, welches aus zwei Platten 12a und 12b besteht, die zusammen einen Kleberkanal 12c bilden, in den durch bekannte, nicht dargestellte Mittel ein schmelzflüssiger Schmelzkleber (Hotmelt) unter Druck gefördert wird. Die erste Platte 12a hat eine Öffnung 12d, die die Leiste 10 verhältnismässig eng umschliesst, während eine Öffnung 12e zusammen mit der Oberfläche der Leiste 10 einen Spalt bildet, der bei einer Leiste 10 mit idealer, glatter Oberfläche überall gleich breit wäre, so dass sich eine überall gleich dicke Schmelzkleberschicht 14 bilden würde. Eine unebene Leistenoberfläche sowie eine Blasenbildung können jedoch zu einer unebenen Oberfläche der Schmelzkleberschicht 14 führen.

Bei einer besonders vorteilhaften Durchlaufgeschwindigkeit von ca. 4 bis 6 m/min befindet sich in einem Abstand von 10-15 cm, insbesondere von ca. 12 cm hinter dem ersten Extrusionswerkzeug 12 ein plattenartiges Kalibrierwerkzeug 16 (Spachtelplatte) mit einer Kalibrieröffnung 16e, die etwas kleiner dimensioniert ist als die Öffnung 12e und so dafür sorgt, dass Blasen und andere Unebenheiten der Schmelzkleberschicht 14 eingeebnet und ausgeglichen werden. Das Kalibrierwerkzeug 16 ist vorzugsweise beheizt und wird bei Verwendung eines auf EVA-Basis hergestellten Schmelzklebers auf einer Temperatur von ca. 150°C gehalten.

Hinter dem Kalibrierwerkzeug 16 durchläuft die mit der Schmelzkleberschicht 14 ummantelte Leiste 10 erfindungsgemäss einen Kühlkanal 20, der vorn und hinten eine dem Querschnitt der Leiste 10 ungefähr angepasste Öffnung besitzt und in den ein Kühlmedium, z.B. gekühlte Luft, gefördert wird, so dass zumindest die Schmelzkleberschicht 14 und vorzugsweise auch noch der Oberflächenbereich der Holzwerkstoffleiste 10 intensiv gekühlt werden.

Schliesslich durchläuft die Leiste 10 ein zweites Extrusionswerkzeug 22, welches insbesondere aus vier Platten 22a, 22b, 22c und 22d besteht, bei denen es sich um eine Einlaufplatte 22a, um eine Umlenkplatte 22b für aufzuextrudierenden, schmelzflüssigen thermoplastischen Kunststoff, eine sog. Schnabelplatte 22c und eine Düsenplatte 22d handelt. Die beiden ersten Platten weisen Öffnungen 22e und 22f auf, die die Leiste 10 in erheblichem Abstand umgeben, wohingegen die Schnabelplatte eine Öffnung 22g besitzt, die sich erfindungsgemäss entgegen der Durchlaufrichtung A trichterförmig erweitert und in ihrem engen Bereich so an den Querschnitt der mit der Schmelzkleberschicht 14 versehenen Leiste 10 angepasst ist, dass, da zumindest die Platten 22c und 22d beheizt sind, die Oberfläche der Schmelzkleberschicht 14 zur Verbesserung der Haftung des aufzuextrudierenden Kunststoffs aufgeheizt und dabei nocheinmal geglättet wird. Die Platten 22c und 22d bilden zusammen einen Kanal 22i für den in das zweite Extrusionswerkzeug durch nicht dargestellte Mittel schmelzflüssig hineingepressten thermoplastischen Kunststoff, der durch die Öffnung 22h der Düsenplatte 22d zu einer Kunststoffschicht 26 umgeformt und auf die Leiste 10 bzw. die Schmelzkleberschicht 14 aufextrudiert wird.

Um die Schmelzkleberschicht 14 ausreichend zu kühlen, beträgt erfindungsgemäss der Abstand zwischen dem Kalibrierwerkzeug 16 und der Schnabelplatte 22c ca. 100 cm, d.h. ungefähr das Fünffache des Abstands des Kalibrierwerkzeugs 16 vom ersten Extrusionswerkzeug 12.

Unmittelbar nach Verlassen des zweiten Extrusionswerkzeugs 22 werden die Kunststoffschicht 26 und die Schmelzkleberschicht 14 intensiv gekühlt, z.B. durch einen Kühlluftstrom oder durch Wasserkühlung. Zu diesem Zweck empfiehlt sich ein nicht dargestelltes, wassergekühltes Glätt- und Kalibrierwerkzeug, in dem die beschichtete Leiste über eine Länge von insbesondere 40 bis 50 cm gekühlt wird. Die Durchlassöffnung dieses Werkzeugs ist an den Querschnitt der beschichteten Leiste genau angepasst. Natürlich hängt die Länge dieses Kalibrierwerkzeugs wesentlich von der Durchlaufgeschwindigkeit der Leiste, der Dicke der Beschichtung, der Massetemperatur der thermoplastischen Kunststoffschicht und von der Temperatur des Kühlmediums (meist Wasser) ab.

Erfindungsgemäss wird das Extrusionswerkzeug 22 auf einer Temperatur von ca. 180°C gehalten, vor allem dann, wenn für die Kunststoffschicht 26 PVC verwendet werden soll. Zwischen dem Kalibrierwerkzeug 16 und der Schnabelplatte 22c sollen die Schmelzkleberschicht 14 und die Leiste 10 so stark gekühlt werden, dass der Schmelzkleber an der Oberfläche der Schmelzkleberschicht 14 eine Temperatur von höchstens ungefähr 30°C besitzt.

Beim Beschichten von Leisten aus Massiv- oder Sperrholz empfiehlt es sich, ca. 10 cm hinter dem zweiten Extrusionswerkzeug 22 eine weitere Station vorzusehen, in der die Beschichtung gekühlt und kalibriert wird, um zu verhindern, dass die Restwärme der aufextrudierten Kunststoffschicht 26 zu neuen Unebenheiten der Beschichtung führt.

Ausser PVC eignen sich für die Beschichtung besonders gut auch Polyäthylen und Polypropylen, obwohl sich grundsätzlich alle thermoplastischen Kunststoffe mit dem erfindungsgemässen Verfahren verarbeiten lassen.

Auch Polyamidschmelzkleber anstelle von EVA-Schmelzklebern führen zu guten Ergebnissen, obwohl sich in Prinzip alle für Holzwerkstoffe geeigneten Schmelzkleber einsetzen lassen. Die Schmelzkleber sollten nicht bei unnötig hohen Temperaturen verarbeitet werden.

Bei Verwendung von auf EVA-Basis hergestellten Schmelzklebern sollte die höchste Klebertemperatur bei ca. 190°C liegen, bei Verwendung eines Schmelzklebers auf Polyamidbasis bei ca. 230°C.

## Patentansprüche

1. Verfahren zum Extrusionsbeschichten einer Holzwerkstoff-Leiste mit einem thermoplastischen Kunststoff im Durchlaufverfahren, bei dem zunächst mittels eines ersten Extrusionswerkzeugs eine Schmelzkleberschicht schmelzflüssig auf die Leiste und dann mittels eines zweiten Extrusionswerkzeugs der thermoplastische Kunststoff auf die Schmelzkleberschicht aufgetragen wird, dadurch gekennzeichnet, dass der Schmelzkleber unmittelbar nach dem Auftragen gekühlt und anschliessend seine Oberfläche mittels eines Kalibrierwerkzeugs geglättet wird, dass dann die Leiste samt Schmelzkleber gekühlt wird, ehe die Leiste in das zweite Extrusionswerkzeug eingeführt wird, und dass hinter dem letzteren die Beschichtung der Leiste gekühlt wird.

2. Verfahren nach Anspruch 1, dadurch gekennzeichnet, dass die Oberfläche des Schmelzklebers zum Glätten auf eine Temperatur von ungefähr 150°C gebracht wird.

3. Verfahren nach Anspruch 1 oder 2, dadurch gekennzeichnet, dass der Schmelzkleber nach dem Glätten auf eine Oberflächentemperatur von höchstens ca. 60°C, vorzugsweise auf weniger als 60°C und insbesondere auf ca. 30°C, gekühlt wird.

4. Verfahren nach einem oder mehreren der Ansprüche 1 bis 3, dadurch gekennzeichnet, dass der thermoplastische Kunststoff, insbesondere bei Verwendung von PVC, bei ca. 180°C auf die Leiste aufextrudiert wird.

5. Verfahren nach einem oder mehreren der Ansprüche 1 bis 4, dadurch gekennzeichnet, dass die Oberfläche des Schmelzklebers unmittelbar vor dem Aufextrudieren des thermoplastischen Kunststoffs erwärmt und dann nachgeglättet wird.

6. Verfahren nach einem oder mehreren der Ansprüche 1 bis 5, gekennzeichnet durch die Verwendung eines Gemischs aus EVA-Harz, Cumaron-Harz und Kreidemehl und/oder Schwerspat als Schmelzkleber.

7. Verfahren nach Anspruch 6, dadurch gekennzeichnet, dass der Schmelzkleber ca. 40% EVA-Harz, ca. 25% Cumaron-Harz und ca. 35% Kreidemehl und/oder Schwerspat-Verbindungen enthält.

8. Verfahren nach einem oder mehreren der vorstehenden Ansprüche, dadurch gekennzeichnet, dass als thermoplastischer Kunststoff PVC verwendet wird.

9. Einrichtung zum Extrusionsbeschichten einer Holzwerkstoff-Leiste (10) mit einem thermoplastischen Kunststoff (26) im Durchlaufverfahren, mit einem ersten Spritzwerkzeug (12) zum Auftragen einer schmelzflüssigen Schmelzkleberschicht (14) auf die Leiste (10) und einem in Durchlaufrichtung im Abstand hinter dem ersten Spritzwerkzeug (12) angeordneten zweiten Spritzwerkzeug (22) zum Auftragen des thermoplastischen Kunststoffs (26) auf die Schmelzkleberschicht (14), dadurch gekennzeichnet, dass zwischen den beiden Spritzwerkzeugen (12, 22) und im Abstand von diesen ein Kalibrierwerkzeug (16) für die Schmelzkleberschicht (14) angeordnet ist.

10. Einrichtung nach Anspruch 9, dadurch gekennzeichnet, dass das Kalibrierwerkzeug (16) beheizt ist.

11. Einrichtung nach Anspruch 9 oder 10, dadurch gekennzeichnet, dass sich die Abstände zwischen dem ersten Spritzwerkzeug (12) und dem Kalibrierwerkzeug (16) einerseits sowie dem letzteren und dem zweiten Spritzwerkzeug (22) andererseits wie ungefähr a:b verhalten, wobei a:b zwischen ca. 1:4 und ca. 1:7 und vorzugsweise bei ca. 1:5 liegt.

12. Einrichtung nach einem oder mehreren der Ansprüche 9 bis 11, dadurch gekennzeichnet, dass das zweite Spritzwerkzeug (22) vor der Mündung eines Kanals (22i) für den thermoplastischen Kunststoff (26) eine Schnabelplatte (22c) aufweist.

## Claims

1. A method for the continuous extrusion coating of a wooden profile with a thermoplastic material, in which a fusion adhesive layer is firstly applied in molten state to the profile by means of a first extrusion tool and then the thermoplastic material is applied to the fusion adhesive layer by means of a second extrusion tool, characterised in that the fusion adhesive is cooled immediately after application and its surface is then smoothed by means of a calibrating tool, in that the profile with the fusion adhesive is then cooled, before the profile is introduced into the second extrusion tool, and in that the coating of the profile is cooled downstream of the second extrusion tool.

2. A method according to claim 1, characterised in that, for smoothing, the surface of the fusion adhesive is brought to a temperature of approximately 150°C.

3. A method according to claim 1 or 2, charac-

terised in that the fusion adhesive is cooled following smoothing to a surface temperature of at the most approx. 60°C, preferably to less than 60°C and more particularly to approx. 30°C.

4. A method according to one or more of claims 1 to 3, characterised in that the thermoplastic material, in particular where PVC is used, is applied to the profile by extrusion at approx. 180°C.

5. A method according to one or more of claims 1 to 4, characterised in that the surface of the fusion adhesive is heated immediately prior to the application by extrusion of the thermoplastic material, and is subsequently re-smoothed.

6. A method according to one or more of claims 1 to 5, characterised by the use of a mixture of EVA resin, Cumaron resin and chalk powder and/or barium sulphate as the fusion adhesive.

7. A method according to claim 6, characterised in that the fusion adhesive contains approx. 40% EVA resin, approx. 25% Cumaron resin and approx. 35% chalk powder barium sulphate compounds.

8. A method according to one or more of the preceding claims, characterised in that PVC is used as the thermoplastic material.

9. A device for the continuous extrusion coating of a wooden profile (10) with a thermoplastic material (26), comprising a first extrusion die (12) for applying a molten fusion adhesive layer (14) onto the profile (10) and a second extrusion die (22), which is arranged at a distance downstream of the first extrusion die (12) in the direction of operation, for applying the thermoplastic material (26) onto the fusion adhesive layer (14), characterised in that a calibrating tool (16) for the fusion adhesive layer (14) is arranged between the two extrusion dies (12, 22) and at a distance therefrom.

10. A device according to claim 9, characterised in that the calibrating tool (16) is heated.

11. A device according to claim 9 or 10, characterised in that the distances between the first extrusion die (12) and the calibrating tool (16) on the one hand, and between the latter and the second extrusion die (22) on the other hand are approximately in the ratio a:b, where a:b is between approx. 1:4 and approx. 1:7 and is preferably approx. 1:5.

12. A device according to one or more of claims 9 to 11, characterised in that the second extrusion die (22) comprises a nose plate (22c) upstream of the opening of a duct (22i) for the thermoplastic material (26).

## Revendications

1. Procédé d'enduction par extension d'un profilé de bois avec une matière synthétique thermoplastique dans un procédé continu, dans lequel tout d'abord au moyen d'une première machine d'extrusion, on dépose une couche de colle à fusion en fusion sur le profilé puis, au moyen d'une seconde machine à extruder, on dépose la matière synthétique thermoplastique sur la couche de colle à fusion, caractérisé en ce que la colle à fusion est refroidie immédiatement après avoir été déposé puis en ce que sa surface est lissée au moyen d'une machine à calibrer, en ce qu'alors le profilé est refroidi avec la colle à fusion, avant d'introduire le profilé dans la seconde machine à extruder, et en ce qu'après cette dernière, on refroidit l'enduit du profilé.

2. Procédé selon la revendication 1, caractérisé en ce qu'on amène la surface de la colle à fusion, aux fins de lissage, à une température d'environ 150°C.

3. Procédé selon la revendication 1 ou 2, caractérisé en ce qu'on refroidit la colle à fusion après le lissage à une température superficielle d'au plus environ 60°C, de préférence à moins de 60°C, et en particulier à environ 30°C.

4. Procédé selon une ou plusieurs des revendications 1 à 3, caractérisé en ce que la matière synthétique thermoplastique, en particulier lorsqu'on utilise du PVC, est extrudée à environ 180°C sur le profilé.

5. Procédé selon une ou plusieurs des revendications 1 à 4, caractérisé en ce que la surface de la colle à fusion est chauffée immédiatement après l'extrusion de la matière synthétique thermoplastique puis lissée.

6. Procédé selon une ou plusieurs des revendications 1 à 5, caractérisé en ce qu'on utilise un mélange de résine EVA, de résine coumarone, et de craie en poudre et/ou de barytine comme colle à fusion.

7. Procédé selon la revendication 6, caractérisé en ce que la colle à fusion contient environ 40% de résine EVA, environ 25% de résine coumarone et environ 35% de craie en poudre et/ou de composés de barytine.

8. Procédé selon une ou plusieurs des revendications précédentes, caractérisé en ce qu'on utilise le PVC comme matière synthétique thermoplastique.

9. Dispositif pour recouvrir par extrusion un profilé de bois (10) avec une matière synthétique thermoplastique (26) dans un procédé continu, avec un premier organe pour injection (12) pour déposer une couche de colle à fusion en fusion (14) sur le profilé (10) et un second organe pour injection (22) disposé dans le sens du parcours à un certain intervalle derrière le premier moule pour injection (12) afin de déposer la matière synthétique thermoplastique (26) sur la couche de colle à fusion (14), caractérisé en ce qu'entre les deux organes pour injection (12, 22) et à un certain intervalle de ceux-ci se trouve une machine à calibrer (16) pour la couche de colle à fusion (14).

10. Dispositif selon la revendication 9, caractérisé en ce que la machine à calibrer (16) est chauffée.

11. Dispositif selon la revendication 9 ou 10, caractérisé en ce que les intervalles entre le premier organe pour injection (12) et la machine à calibrer (16), d'une part, ainsi qu'entre cette dernière et le second organe pour injection (22) d'autre part, sont entre eux comme environ a:b où a:b se situe entre environ 1:4 et environ 1:7 et de préférence à environ 1:5.

12. Dispositif selon une ou plusieurs des revendications 9 à 11, caractérisé en ce que le second organe pour injection (22) présente avant le débouché d'un canal (22i) pour la matière synthétique thermoplastique (26) une plaque racloir (22c).

EP 0 210 297 B1